# EUROPÄISCHE PATENTANMELDUNG

(11) **EP 3 534 143 A1**
(43) Veröffentlichungstag der Anmeldung: **04.09.2019**
(21) Anmeldenummer: 19158536.3
(22) Anmeldetag: 21.02.2019
(51) Int. Cl.: G01N 11/14, G01N 11/00

(54) **RHEOMETER**

(30) Priorität: 01.03.2018 AT 501752018
(71) Anmelder: Anton Paar GmbH, 8054 Graz-Straßgang (AT)
(72) Erfinder: Ziegler, Anton, 8047 Kainbach (AT)
(74) Vertreter: Wildhack & Jellinek

(57) **Zusammenfassung**

Die Erfindung betrifft ein Rheometer mit zumindest einer in einer feststehenden Trägereinheit (2) rotierbar gelagerten Messwelleneinheit (1, 30), die eine von einem Motor (10a, 10b) antreibbare und einen Messteil tragende Messwelle (8a, 8b) aufweist, wobei an der Trägereinheit (2) und an der Messwelleneinheit (1) jeweils zumindest eine Sendeeinheit (5, 7) und zumindest eine Empfangseinheit (4, 9) für eine Datenübertragung zwischen der Messwelleneinheit (1, 30) und der Trägereinheit (2) angeordnet sind, und wobei auf der Messwelleneinheit (1, 30) zumindest ein Messsensor (14a, 14b) zur Detektion von zumindest einem Parameter, vorzugsweise Temperatur und/oder Druck des Messteiles (3a, 3b) und/oder der zu untersuchenden Probe (12) vorgesehen ist, wobei zur gegenseitigen Übertragung von Daten, insbesondere der vom Messsensor (14a, 14b) detektierten Daten, zwischen der Messwelleneinheit (1, 30) und der Trägereinheit (2) die Sendeeinheiten (5, 7) von optischen Transmittern, und die Empfangseinheiten (4, 9) von optischen Empfängern gebildet sind, wobei die an der Trägereinheit (2) befindlichen optischen Transmitter (5) sowohl zur Übertragung von Daten als auch zur Übertragung von Energie an die optischen Empfänger (4) auf der Messwelleneinheit (1, 30) eingerichtet sind.

## Beschreibung

Die Erfindung betrifft ein Rheometer gemäß dem Oberbegriff des Patentanspruches 1.

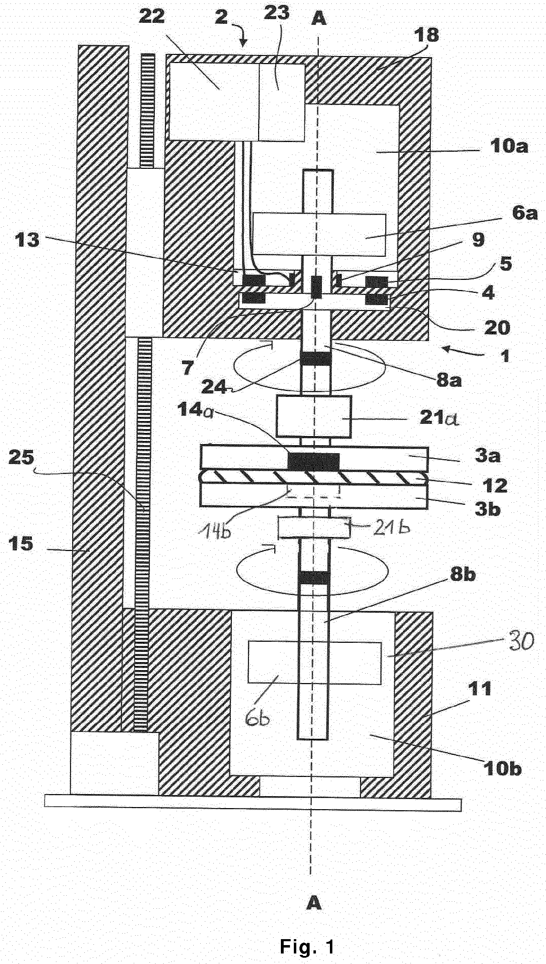

Rheometer dieser Art sind aus dem Stand der Technik bekannt. Erfindungsgemäß einsetzbare Rheometer dieser Art werden beispielsweise in der ATPS 510042 B1 beschrieben. Der prinzipielle Aufbau eines derartigen Rheometers so wie es erfindungsgemäß zum Einsatz kommen kann, wird in Fig. 1 näher erläutert. Unterschiedliche Ausführungen von Rotationsrheometern mit kombiniertem Antriebs- und Messmotor sind ebenso bekannt wie getrennte Anordnungen von Antrieb und Drehmomentmessung durch einen separaten Messmotor am jeweils anderen Messteil. Der funktionale Zusammenhang zwischen Stromaufnahme des Messmotors und Drehmoment ist bekannt, die Auswertung erfolgt dann mittels einer angeschlossenen Auswerteeinheit. Der Benutzer kann über eine Bedieneinheit des Rheometers die Art der Versuche, die Versuchsparameter und Versuchsbedingungen auswählen und/oder eingeben, die Ergebnisse werden mit einer Anzeigeeinheit ausgegeben. Neben Computereinheiten und herkömmlichen Tastaturen und Bildschirmen sind auch kombinierte Touchscreens und/oder Multitouchpads mit Gestenerkennung, aber auch berührungslose Eingabehilfen mit beispielsweise optischer oder kapazitiver Gestenerkennung verwendbar.

Es gibt Anordnungen, bei denen beide Messteile bewegbar bzw. rotierbar sind, Anordnungen mit separatem Dreh- und Messmotor, bei denen ein Messteil rotierend oder rotierend oszillierend antreibbar ist und der zweite Messteil mit einer Messachse ausgestattet ist und das auf diesen wirkende Drehmoment ermittelt wird, sowie Kombinationen eines Messmotors mit einem zweiten Messmotor (AT508706 B1) oder einem Linearmotor (AT515219 B1).
Während Messsensoren in Rheometern mit einem feststehenden Messteil einfach in diesem angebracht werden können und die Verbindung zur Steuer- und Auswerteeinheit einfach durchgeführt werden kann, ist die Durchführung von Messleitungen über die im Regelfall luftgelagerte bewegte Messachse nur schwer möglich.
Eine induktive Übertragung der für die Sensoren nötigen Energie und der Messwerte beeinflusst die empfindliche Sensorik des Rheometermotors.
Wesentliches Ziel der Erfindung ist es daher, im bewegten Messteil des Rheometers Messsensoren zu integrieren, die Messdaten vor allem betreffend den Zustand der zwischen den Messteilen gescherten Probe ermitteln und berührungslos an die Auswerteeinheit übermitteln können, ohne die rheologische Messung zu beeinflussen.

Der feststehende Teil des Rheometers wird im Folgenden als Trägereinheit 2 bezeichnet; der rotierende Teil mit dem Messsensor wird im Folgenden als Messwelleneinheit 1 bezeichnet. Ein erfindungsgemäßes Rheometer kann auch zwei Messwelleneinheiten 1, 30 besitzen, die gegenüber der Trägereinheit 2 und relativ zueinander rotierbar sind. In diesem Fall kann ein Messsensor am oberen und/oder am unteren Messteil angeordnet werden. Die obere Messwelleneinheit umfasst den oberen Messteil, der mit seiner oberen Messwelle rotierbar ist. Die untere Messwelleneinheit umfasst den unteren Messteil, der mit seiner unteren Messwelle rotierbar ist. Die von dem Messsensor der jeweiligen Messwelleneinheit 1, 30 gelieferten Messwerte sind der Auswerteeinheit zugeführt.

Zur Trägereinheit 2 gehören ein Gehäuse 18, ein Stativ 15 und ein Grundgestell 11, wobei das Gehäuse 18 höhenverstellbar auf dem Grundgestell 11 mit einem Spindelantrieb 25 verschiebbar geführt ist. Innerhalb des Gehäuses 18 befindet sich ein Motor 10, insbesondere ein Messmotor, der eine Messwelle 8a der Messwelleneinheit 1 rotiert. Die Messwelle 8a ist mit Luftlagern 6a im Gehäuse 18 rotierbar gelagert. Die Messwelle 8a trägt in ihrem unteren Endbereich einen oberen Messteil 3a. Dieser Messteil 3a wirkt mit einem unteren Messteil 3b zusammen, der am Grundgestell 11 feststeht oder mit einem zweiten Messmotor 10b rotierbar gelagert ist. Die untere zweite Messwelleneinheit 30 kann prinzipiell denselben Aufbau besitzen und die gleichen Bauelemente umfassen wie die obere Messwelleneinheit. Entsprechend können ein weiteres Luftlager 6b, ein weiterer Motor 10b und eine weitere Messwelle 8b vorhanden sein. Sämtliche Ausführungen für die Messwelleneinheit 1 haben auch Gültigkeit für die weitere Messwelleneinheit 30. Die weitere Messwelleneinheit 30 kann im Wesentlichen erweitert werden, bis sie ident zur Messwelleinheit 1 wird. Dazu werden dann eine weitere Prozessoreinheit 21b und zumindest ein weiterer Messsensor 14b und entsprechende LEDs, Fotosensoren, Platinen usw. eingebaut.

Zwischen dem oberen Messteil 3a und dem unteren Messteil 3b befindet sich die zu untersuchende Probe 12. Der obere und/oder untere Messteil 3a, 3b tragen zumindest einen Messsensor 14 zur Messung der Temperatur der Probe 12 und/oder des jeweiligen Messteiles 3a, 3b und/oder des Druckes in der Probe 12 und für allfällige weitere Messgrößen. Zur Auswertung von Messwerten dient eine schematisch dargestellte Steuer- und Auswerteeinheit 22, welche auch den jeweiligen Messmotor 10a, 10b regelt bzw. abfühlt. Neben der abgebildeten Platte-Platte-Geometrie können die Messteile unterschiedliche Geometrien aufweisen; bekannt sind z.B. konzentrische Zylindermesssysteme, Kegel-Platte-Messsysteme sowie spezielle Anordnungen für unterschiedliche Anwendungsbereiche, z.B. zur Messung des Immobilisierungsverhaltens von Dispersionen oder Baustoffen, elektro-rheologische Messungen usw. Auch Rheometer mit diesen Messteilen bzw. Messteilkombinationen können mit erfindungsgemäß vorgesehenen Messsensoren ausgestattet werden und über eine Kupplung 24 mit der Messwelle verbunden werden.

Die Erfindung stellt sich die Aufgabe, die Übertragung von Daten zwischen der Trägereinheit 2 und der Messwelleneinheit 1 bzw. der weiteren Messwelleneinheit 30 einfach zu gestalten, wobei besonderes Augenmerk auf die Betriebssicherheit gerichtet wird. Des Weiteren soll eine ausreichende Energieversorgung des bzw. der auf der jeweiligen Messwelleneinheit 1, 30 befindlichen Messsensors(en) 14a, 14b und einer dort befindlichen Prozessoreinheit 21a, 21b bei gleichzeitiger Sicherheit der Datenübertragung und Einfachheit in der Konstruktion gewährleistet werden.
Die Prozessoreinheit 21a bzw. 21b enthält die Elektronik für den Betrieb des zumindest einen Sensors im Messteil z.B. den AD-Konverter für die Messdaten, sowie gegebenenfalls einen Energiespeicher (Kondensator), der die Stromversorgung für den Sendebetrieb der Messwelleneinheit sicherstellt. Eine Daten-Speichereinheit kann Daten betreffend den Messkörper wie Geometriedaten und/oder Kalibrationsdaten des verwendeten Messteils enthalten und so den Messteilwechsel vereinfachen.

Erfindungsgemäß werden diese Ziele mit den Merkmalen des Kennzeichens des Anspruchs 1 erreicht.

Die Anordnung und Ausbildung der optischen Transmitter und optischen Empfänger kann rasch und wirtschaftlich erfolgen und kann betriebssicher gestaltet werden und gleichzeitig mit Daten, die auf der Messwelleneinheit benötigt werden, kann auch die zur Verarbeitung der Messdaten in der Prozessoreinheit und den Betrieb des Messsensors auf der Messwelle bzw. auf der Messwelleneinheit benötigte Energie übertragen werden. Die hierzu eingesetzten Bauteile sind optische Transmitter, vorzugsweise LEDs oder Laser- bzw. Leichtdioden.

Den optischen Transmittern kommt somit eine Doppelfunktion zu und sie werden entsprechend von der Prozessoreinheit bzw. der Steuer- und Auswerteeinheit angesteuert. Vorteilhafterweise kann vorgesehen sein, dass die Prozessoreinheit mit der an die optischen Empfänger, vorzugsweise Fotosensoren, übertragenen Energie den Messsensor und den zumindest einen optischen Transmitter für das Absenden der detektierten Messwerte versorgt und einlangende Datensignale auswertet und gegebenenfalls überschüssige Energie abspeichert.

Der Aufbau und der Betrieb werden vereinfacht, wenn auf der Messwelleneinheit eine Prozessoreinheit vorgesehen ist, die die Datenabgabe von der Messwelleneinheit zur Trägereinheit und den Empfang der Daten und/oder Energie von der Trägereinheit steuert und/oder die vom Messsensor ermittelten Messwerte aufbereitet und dem zumindest einen zur Datenübertragung auf die Trägereinheit vorgesehenen optischen Transmitter zuführt, und/oder an der Trägereinheit eine Steuer- und Auswerteeinheit vorgesehen ist, mit der die Abgabe von Daten und/oder Energie an den bzw. die auf der Messwelleneinheit befindlichen optischen Empfänger und der Empfang und die Auswertung von den auf der Messwelleneinheit gelegenen optischen Transmittern erhaltenen Daten steuerbar ist.
Vorteilhaft ist es, wenn die Prozessoreinheit und/oder die Steuer- und Auswerteeinheit die von den optischen Transmittern abzugebene Energie und/oder Lichtmenge einregeln.

Für eine einfache und exakte Übertragung von Daten ist es zweckmäßig, wenn an der Trägereinheit und/oder an der Messwelleneinheit bzw. in der Prozessoreinheit und in der Steuer- und Auswerteeinheit jeweils zumindest eine Schalteinheit vorgesehen ist, mit der die Licht- und/oder Energieabstrahlung der optischen Transmitter taktbar sind, wobei die Taktung den von der Schalteinheit vorgegebenen und in der Prozessoreinheit und/oder Steuer- und Auswerteeinheit dekodierbaren Code für zu übertragende Daten darstellt.

Ein konstruktiv einfacher Aufbau ergibt sich, wenn ein optischer Transmitter an der Messwelle zum Absenden von Daten und ein zugeordneter optischer Empfänger an der Trägereinheit zum Empfang dieser Daten vorgesehen sind, wobei diese optischen Transmitter auf der Messwelle zentral im Bereich der Rotationsachse, gegebenenfalls stirnseitig oder auf der Umfangsfläche der Messwelle gelegen sind und der zugeordnete optische Empfänger an der Trägereinheit der Messwelle zugekehrt im Umfangs- bzw. Umgebungsbereich der Messwelle oder der Stirnseite der Messwelle gegenüberliegend angeordnet ist oder wenn der zur Datenabgabe an der Messwelleneinheit angeordnete optische Transmitter stirnseitig im messteilfernen Endbereich der Messwelle angeordnet ist, wobei der diesem optischen Transmitter zugeordnete optische Empfänger gegenüberliegend an der Trägereinheit im Innenbereich des Motors angeordnet ist.

In Hinblick auf einen Gewichtsausgleich bzw. eine Vermeidung einer ungleichmäßigen Verteilung von Massen kann vorgesehen sein, dass eine Mehrzahl von zum Empfang von Energie eingerichteten optischen Empfängern an der Messwelleneinheit und/oder eine Mehrzahl von Energie abgebenden optischen Transmittern an der Trägereinheit, vorzugsweise jeweils auf einer Platine längs des Umfangs eines Kreises mit Mittelpunkt in der Rotationsachse der Messwelle, vorzugsweise zentrisch symmetrisch zur Rotationsachse verteilt, angeordnet sind.

Im Folgenden wird die Erfindung anhand der Zeichnung beispielsweise näher erläutert. Fig. 1 zeigt einen schematischen Schnitt durch ein Rheometer, Fig. 2 und 3 zeigen Detailschnitte des oberen Bereiches des Rheometers. Fig. 4 zeigt die Anordnung von optischen Transmittern und optischen Empfängern auf Platinen. Im Folgenden wird die Erfindung bezugnehmend auf optische Transmitter und optische Empfänger näher erläutert. Unter optischen Transmittern sind alle Licht und Lichtenergie abstrahlenden elektronischen Bauteile wie z.B. LEDs, Laserdioden, Leuchtdioden usw. zu verstehen. Unter optischen Empfängern sind Licht und Lichtenergie empfangende elektronische Bauteile wie z.B. Fotosensoren usw. zu verstehen.

Wie aus Fig. 1 bis 3 ersichtlich, trägt die Messwelle 8a einen Aufnahmeteil bzw. eine Platine 20, der bzw. die mit der Messwelle 8a fest verbunden bzw. mit dieser rotierbar ist. Auf dem Aufnahmeteil bzw. dieser Platine 20 befinden sich Empfangseinheiten 4 in Form von optischen Empfängern 4, vorzugsweise Fotosensoren, auf die Licht von am Gehäuse 2 oder am Motor 10a vorgesehenen optischen Transmittern 5, vorzugsweise LEDs und/oder Laserdioden und/oder Leuchtdioden, gestrahlt wird.

Die optischen Transmitter 5 können ebenso wie die optischen Empfänger 4 jeweils auf einer ringförmigen Aufnahmeteil , gebildet beispielsweise aus Platine 20 bzw. Platine 13, rund um die Achse A der Messwelle 8a angeordnet sein. Die optischen Empfänger 4 und die optischen Transmitter 5 liegen bei parallel zueinander angeordneten Platinen 13, 20 einander gegenüber und bei einer Verdrehung der Platine 20 relativ zur Platine 13 ist Vorsorge getroffen, dass das Licht der optischen Transmitter 5 immer auf einen zugeordneten optischen Empfänger 4 trifft. Dazu ist die Abstrahlung der optischen Transmitter 5 bzw. der Abstrahlwinkel derart eingerichtet bzw. gewählt, dass sich die auf der Platine 20 ausbildenden Lichtflecken überdecken und so sämtliche optische Empfänger 4 zu jeder Zeit angestrahlt bzw. beleuchtet sind. Damit sind eine Datenübertragung und eine Energieversorgung jederzeit sichergestellt. Die zu übertragenden Daten sind vor allem Messdaten des Messsensors 14, aber auch Umgebungsparameter im Bereich des Messteiles 3a oder Parameter des Messteiles 3a selbst.

Nicht dargestellt sind die Leitungen, die von den optischen Empfängern 4 zu einer auf der Messwelle 8a im Bereich des oberen Messteils 3a gelegenen Prozessoreinheit 21a führen. Diese Leitungen können innerhalb der Messwelle 8a geführt werden. Die Prozessoreinheit 21a ist über eine nicht dargestellte Leitung mit dem Messsensor 14a, der sich direkt am oberen Messteil 3a befindet, verbunden.

Die am Gehäuse 2 und/oder am Motor 10a befindlichen optischen Transmitter 5 sind über Leitungen mit einer Steuer- und Auswerteeinheit 22 verbunden, mit der die von den optischen Transmittern 5 abgestrahlte Energie und/oder Lichtmenge einstellbar bzw. steuerbar bzw. taktbar ist.

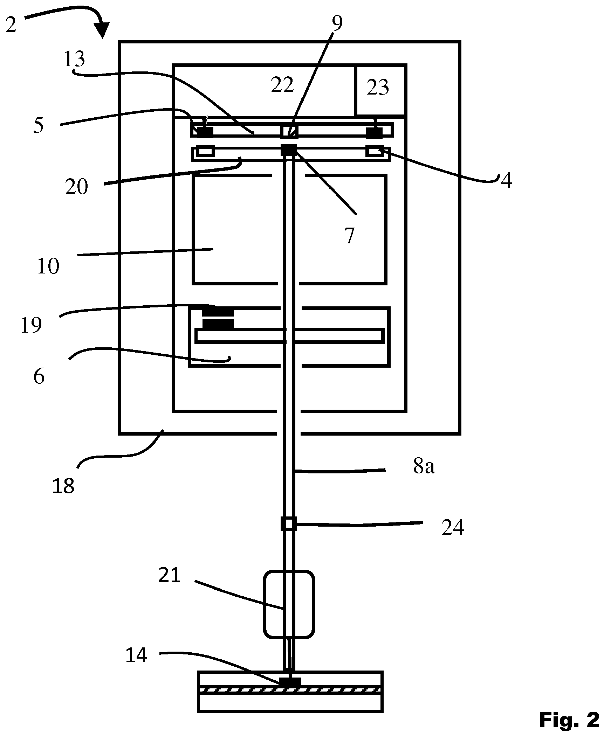

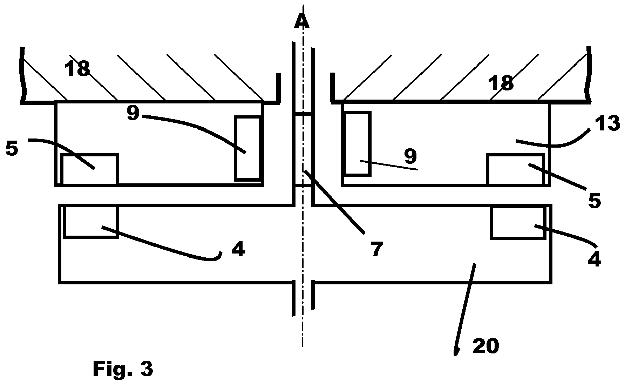

Zur Datenübertragung von der Messwelleneinheit 1 auf die Trägereinheit 2 dienen zumindest ein optischer Transmitter 7 an der Messwelleneinheit 1 und zumindest ein optischer Empfänger 9 an der Trägereinheit 2. Die optischen Transmitter 7 können sich, wie in Fig. 1 und 3 dargestellt, am Umfangsbereich der Messwelle 8a befinden oder, wie in Fig. 2 dargestellt, am stirnseitigen Ende der Messwelle 8a liegen und damit in bevorzugter Ausführungsform in der Messachse A liegen.

Prinzipiell umfasst die Messwelleneinheit 1 des Rheometers einen Antrieb bzw. Motor 10a für die Messwelle 8a, ein Lager 6a, das z.B. ein Luftlager sein kann, und eine Einheit für die Normalkraftmessung NF, gegebenenfalls eine Winkelmesseinheit, die je nach Bauart mit der Steuer- bzw. Auswerteeinheit 22 verbunden ist. Im dargestellten Fall ist die Einheit für die Normalkraftmessung 19 im Luftlager integriert. Das Drehmoment wird in der Regel aus dem Motorstrom bestimmt. Die Art des Motors ist beliebig. Die Messung der Rotation kann optisch mit einem an der Messwelle 8a angebrachten oder diese abfühlenden Messsensor erfolgen. Beispiele für derartige Ausführungsformen können den genannten Druckschriften entnommen werden. Die erfindungsgemäße Übertragung von Energie und Daten ist nicht an die tatsächliche Ausführungsform des Rheometers gebunden.

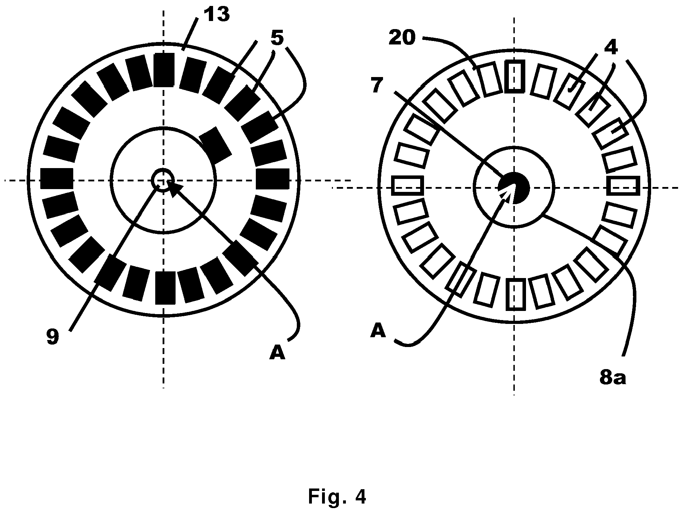

Fig. 4 zeigt die optischen Transmitter 5, 7 und optischen Empfänger 4, 9 auf Platinen 13, 20 vormontiert. Es ist vorteilhaft, die Teile 13 und/oder 20 in Form von ringförmigen Platinen zu gestalten, die die optischen Transmitter 5 sowie optischen Empfänger 4 entsprechend vorgefertigt tragen und austauschbar an der Messwelle 8a bzw. im Gehäuse 2 angebracht sind. Die Platine 20 kann wie in Fig. 2 gezeigt an der vom Messteil abgewandten Seite der Messwelle 8a montiert werden, während die Platine 13 am Gehäuse des Motors befestigt wird und der Platine 20 gegenüber steht. Beide Platinen 13, 20 sind hier bevorzugt rotationssymmetrisch um die Achse A ausgeführt, was vor allem für die mit der Messwelle mitbewegte Platine vorteilhaft ist. Prinzipiell ist es möglich, die optischen Empfänger 4 und/oder optischen Transmitter 5 eigenständig bzw. unabhängig voneinander am Gehäuse 18 bzw. auf der Platine 20 zu montieren bzw. die optischen Transmitter 5 und die optischen Empfänger 4 auf vorgefertigten Platinen in der gewünschten Lage anzuordnen und zu verdrahten und dann am Gehäuse 2 oder am Motor 10a bzw. an der Messwelle 8a bzw. auf dem Aufnahmeteil 20 zu montieren.

Es ist auch möglich, die die optischen Transmitter 5 tragenden Teile bzw. die Platine 13 am Motor 10 oder Gehäuse 2 derart zu montieren, dass der bzw. die Fotosensor(en) 9 einer von der Messwelle 8a getragenen optischen Transmitter 7 für eine Übertragung direkt gegenüberliegen.

Prinzipiell ist es auch möglich, wie in Fig. 2 dargestellt, die Messwelle 8a durch das Luftlager 6 und den Motor 10 hindurch über den Motor 10 hinaus zu führen und oberhalb des Motors 10 bzw. im oberen Endbereich des Gehäuses 18 oder der Trägereinheit 2 den Aufnahmeteil 20 und die Platine 13 anzuordnen. Hier bewährt sich eine stirnseitige Anordnung der optischen Transmitter 7 auf der Messwelle 8a gegenüberliegend einem zentral auf der Platine 13 angeordneten Fotosensor 9.

Mit der auf der Trägereinheit 2 befindlichen Steuereinheit 22 kann die Leuchtintensität der optischen Transmitter, vor allem der optischen Transmitter 5, zur Anpassung der zulässigen Spannung der optischen Empfänger 4 der Messwelleneinheit 1 eingeregelt werden.

Die Spannung in den Bauteilen auf der Messwelleneinheit 1 darf durch den Energieeintrag nicht zu hoch werden. Dies ist vor allem für die korrekte Datenübertragung und Datenerkennung wichtig. Dazu wird in der Prozessoreinheit 21 ermittelt, wie groß die Spannung an den optischen Empfängern 4 durch die eingestrahlte Energie ist. Durch Übertragung entsprechender Daten an die Steuer- und Auswerteeinheit 22 bzw. die Schalteinheit 23 und Anpassen der Betriebesspannung der optischen Transmitter 5 kann die Energieübertragung bzw -versorgung auf einem optimalen Wert gehalten werden.

An der Messwelle 8a ist eine Kupplung 24 vorgesehen, mit der der obere Messteil 3a sowie der Messsensor 14 und der Prozessor 21 gemeinsam austauschbar sind, um diese an unterschiedliche Proben 12 anpassen zu können.

Mit den optischen Transmittern 5 kann eine gleichmäßige bzw. kontinuierliche Beleuchtung der sich gegebenenfalls im Zuge der Messung relativ zu den optischen Transmittern 5 verdrehenden optischen Empfängern 4 gewährleistet werden. Die Anzahl der optischen Transmitter 5, die vorzugsweise gleichmäßig um die Messachse A bzw. die Messwelle 8a verteilt angeordnet sind, besitzt einen optimalen Wert abhängig von der Größe der optischen Transmitter, der sich aus dem Kreisumfang der Platinen 13 bzw. des Tragteils 20 und dem Abstrahlwinkel der optischen Transmitter ergibt. Optische Transmitter, insbesondere LEDs, besitzen einen definierten Abstrahlwinkel, der ihrem jeweiligen Datenblatt zu entnehmen ist. Bevorzugt werden optische Transmitter eingesetzt, die einen Abstrahlwinkel von 60° besitzen. Der gegenseitige Abstand der optischen Transmitter längs des Umfangs der Platine 13 wird so gewählt, dass die emittierten Lichtkegel sich auf dem Tragteil 20 überlappen, derart, dass auch während einer relativen Rotation des Aufnahmeteiles 20 gegenüber der Platine 13 die Ausleuchtung aller optischen Empfänger 4 möglichst konstant gehalten wird. Damit kann sichergestellt werden, dass die Energie- und Datenübertragung unabhängig von der Winkellage des Messteils 3a bzw. der Messwelle 8a gegenüber dem Gehäuse 2 bzw. Motor 10 erfolgt.

Die für die Messwelleneinheit 1 getroffenen Ausführungen betreffend optische Transmitter, optische Empfänger und Daten- und Energieübertragung gelten in gleicher Weise für die wetiere Messwelleneinheit 30.

Unter Licht wird elektromagnetische Strahlung vom IR- bis UV-Bereich verstanden.

Bei einer bevorzugten Ausführungsform der Erfindung ist vorgesehen, dass die Prozessoreinheit 21a, 21b und/oder die Steuer- und Auswerteeinheit 22 eine Regeleinheit aufweisen, in der ein Sollwertspeicher für einen Sollwert für die von den optischen Transmittern 5, 7 in die Fotosensoren 4 eingestrahlte Energie und die an den optischen Empfängern 4, insbesondere Fotosensoren, ausgebildete Spannung angeordnet ist. An den Sollwertspeicher ist eine Vergleichschaltung angeschlossen, mit der der Sollwert mit einem der eingestrahlten Energie und der damit ausgebildeten Spannung entsprechenden Istwert vergleichbar ist, wobei in Abhängigkeit des Vergleichergebnisses die von den optischen Transmittern 5, 7 abgestrahlte Energie einregelbar ist. Damit werden Überbelastungen der elektronischen Bauteile, insbesondere der Fotosensoren, vermieden. Ferner kann die Energieeinspeisung vor allem bei einer Rotation des Aufnahmeteiles 20 gegenüber der Platine 13 vergleichmäßigt werden.

## Patentansprüche

1. Rheometer mit zumindest einer in einer feststehenden Trägereinheit (2), vorzugsweise ein Gehäuse (2) oder ein Stativ (15), rotierbar gelagerten Messwelleneinheit (1, 30), die eine von einem Motor (10a, 10b), vorzugsweise Messmotor, antreibbare und einen Messteil tragende Messwelle (8a, 8b) aufweist, wobei an der Trägereinheit (2) und an der Messwelleneinheit (1) jeweils zumindest eine Sendeeinheit (5, 7) und zumindest eine Empfangseinheit (4, 9) für eine Datenübertragung zwischen der Messwelleneinheit (1, 30) und der Trägereinheit (2) angeordnet sind, und wobei auf der Messwelleneinheit (1, 30) zumindest ein Messsensor (14a, 14b) zur Detektion von zumindest einem Parameter, vorzugsweise Temperatur und/oder Druck des Messteiles (3a, 3b) und/oder der zu untersuchenden Probe (12) vorgesehen ist, **dadurch gekennzeichnet, dass** zur gegenseitigen Übertragung von Daten, insbesondere der vom Messsensor (14a, 14b) detektierten Daten, zwischen der Messwelleneinheit (1, 30) und der Trägereinheit (2) die Sendeeinheiten (5, 7) von optischen Transmittern, vorzugsweise LEDs oder Laserdioden oder Leuchtdioden, und die Empfangseinheiten (4, 9) von optischen Empfängern, vorzugsweise Fotosensoren, gebildet sind, die einander zugeordnet, insbesondere in einander gegenüberliegenden, senkrecht zur Achse (A) der Messwelle (8a, 8b) verlaufenden Ebenen, angeordnet sind, wobei die an der Trägereinheit (2) befindlichen optischen Transmitter (5) sowohl zur Übertragung von Daten als auch zur Übertragung von Energie an die optischen Empfänger (4) auf der Messwelleneinheit (1, 30) eingerichtet sind und zumindest die von den auf der Messwelleneinheit (1, 30) befindlichen optischen Transmitter (7) und dem Messsensor (14a, 14b) benötigte Energie für eine Datenabgabe bzw. -übertragung in die optischen Empfänger (4) einspeisen bzw. an diese übertragen.

2. Rheometer nach Anspruch 1, **dadurch gekennzeichnet, dass** ein optischer Transmitter (7) an der Messwelle (8a, 8b) zum Absenden von Daten und ein zugeordneter optischer Empfänger (9) an der Trägereinheit (2) zum Empfang dieser Daten vorgesehen sind, wobei diese optischen Transmitter (7) auf der Messwelle (8a, 8b) zentral im Bereich der Rotationsachse (A), gegebenenfalls stirnseitig oder auf der Umfangsfläche der Messwelle (8a, 8b) gelegen ist und der zugeordnete optische Empfänger (9) an der Trägereinheit (2) der Messwelle (8a, 8b) zugekehrt im Umfangs- bzw. Umgebungsbereich der Messwelle (8a, 8b) oder der Stirnseite der Messwelle (8a, 8b) gegenüberliegend angeordnet ist.

3. Rheometer nach Anspruch 1 oder 2, **dadurch gekennzeichnet, dass** eine Mehrzahl von zum Empfang von Energie eingerichteten optischen Empfängern (4) an der Messwelleneinheit (1, 30) und/oder eine Mehrzahl von Energie abgebenden optischen Transmittern an der Trägereinheit (2), vorzugsweise jeweils auf einer Platine (13, 20) längs des Umfangs eines Kreises mit Mittelpunkt in der Rotationsachse (A) der Messwelle (8a, 8b), vorzugsweise zentrisch symmetrisch zur Rotationsachse (A) verteilt, angeordnet sind.

4. Rheometer nach einem der Ansprüche 1 bis 3, **dadurch gekennzeichnet,**
- **dass** auf der Messwelleneinheit (1) eine Prozessoreinheit (21a, 21b) vorgesehen ist, die die Datenabgabe von der Messwelleneinheit (1) zur Trägereinheit (2) und den Empfang der Daten und/oder Energie von der Trägereinheit (2) steuert und/oder die vom Messsensor (14a, 14b) ermittelten Messwerte aufbereitet und dem zumindest einen zur Datenübertragung auf die Trägereinheit (2) vorgesehenen optischen Transmitter (7) zuführt, und/oder
- **dass** an der Trägereinheit (2) eine Steuer- und Auswerteeinheit (22) vorgesehen ist, mit der die Abgabe von Daten und/oder Energie an die auf der Messwelleneinheit (1, 30) befindlichen optischen Empfänger (4) und der Empfang und die Auswertung von den auf der Messwelleneinheit (1) gelegenen optischen Transmittern (7) erhaltenen Daten steuerbar ist.

5. Rheometer nach einem der Ansprüche 1 bis 4, **dadurch gekennzeichnet, dass** die Prozessoreinheit (21a, 21b) mit der an die optischen Empfänger (4) übertragenen Energie den Messsensor (14a, 14b) und den zumindest einen optischen Transmitter (7) für das Absenden der detektierten Messwerte versorgt und einlangende Datensignale auswertet und gegebenenfalls überschüssige Energie abspeichert.

6. Rheometer nach einem der Ansprüche 1 bis 5, **dadurch gekennzeichnet, dass** an der Trägereinheit (2) und/oder an der Messwelleneinheit (1, 30) bzw. in der Prozessoreinheit (21a, 21b) und in der Steuer- und Auswerteeinheit (22) jeweils zumindest eine Schalteinheit (23) vorgesehen ist, mit der die Licht- und/oder Energieabstrahlung der optischen Transmitter (5, 7) taktbar sind, wobei die Taktung den von der Schalteinheit (23) vorgegebenen und in der Prozessoreinheit (21a, 21b) und/oder Steuer- und Auswerteeinheit (22) dekodierbaren Code für zu übertragende Daten darstellt.

7. Rheometer nach einem der Ansprüche 1 bis 6, **dadurch gekennzeichnet, dass** die Prozessoreinheit (21a, 21b) und/oder die Steuer- und Auswerteeinheit (22) die von den optischen Transmittern (5, 7) abzugebene Energie und/oder Lichtmenge einregeln.

8. Rheometer nach einem der Ansprüche 1 bis 7, **dadurch gekennzeichnet, dass** der zur Datenabgabe an der Messwelleneinheit (1, 30) angeordnete optische Transmitter (7) stirnseitig im messteilfernen Endbereich der Messwelle (8a, 8b) angeordnet ist, wobei der diesem optischen Transmitter (7) zugeordnete Fotosensor (9) gegenüberliegend an der Trägereinheit (2) im Innenbereich des Motors (10a, 10b) angeordnet ist.

9. Rheometer nach einem der Ansprüche 1 bis 8, **dadurch gekennzeichnet, dass** die an der Trägereinheit (2) befindlichen optischen Transmitter (5) vom Motor (10a, 10b) bzw. - der Trägereinheit (2) direkt getragen sind.

10. Rheometer nach einem der Ansprüche 1 bis 9, **dadurch gekennzeichnet, dass** die optischen Transmitter (5) längs des Umfangs einer insbesondere kreisförmigen Platine (13) verteilt angeordnet sind, welche einer die optischen Empfänger (4) tragenden Platine bzw. einem Aufnahmeteil (20) gegenüberliegt, wobei die Platine (13) gegebenenfalls von der Trägereinheit (2) bzw. dem Motor (10a, 10b) getragen ist.

11. Rheometer nach einem der Ansprüche 1 bis 10, **dadurch gekennzeichnet, dass** die optischen Transmitter (5) einen vorgegebenen Abstrahlwinkel besitzen und in einem Abstand von den optischen Empfängern (4) liegen, derart, dass die von den optischen Transmittern (5) emittierten Lichtkegel sich in dem Flächenbereich, der von den optischen Empfängern (4) während ihrer Rotation um die Achse (A) der Messelle (8a, 8b) überstrichen wird, überlappen bzw. diesen Flächenbereich durchgehend bzw. zur Gänze ausleuchten.

12. Rheometer nach einem der Ansprüche 7 bis 11, **dadurch gekennzeichnet,**
- **dass** die Prozessoreinheit (21a, 21b) und/oder die Steuer- und Auswerteeinheit (22) eine Regeleinheit aufweisen, in der ein Sollwertspeicher für einen Sollwert für die von den optischen Transmittern (5,7) in die Fotosensoren (4) eingestrahlte Energie und die an den optischen Empfängern (4), insbesondere Fotosensoren, ausgebildete Spannung angeordnet ist, und
- **dass** an den Sollwertspeicher eine Vergleichschaltung angeschlossen ist, mit der der Sollwert mit einem der eingestrahlten Energie und der damit ausgebildeten Spannung entsprechenden Istwert vergleichbar ist, wobei in Abhängigkeit des Vergleichergebnisses die von den optischen Transmittern (5, 7) abgestrahlte Energie einregelbar ist.
